(19) **Europäisches Patentamt / European Patent Office / Office européen des brevets**

(11) **EP 4 733 262 A1**

(12) **EUROPEAN PATENT APPLICATION**

(43) Date of publication:
29.04.2026 Bulletin 2026/18

(21) Application number: 25209442.0

(22) Date of filing: 17.10.2025

(51) International Patent Classification (IPC):
*C01G 51/42* $^{(2025.01)}$    *H01M 4/525* $^{(2010.01)}$

(52) Cooperative Patent Classification (CPC):
**C01G 51/42; H01M 4/131; H01M 4/525;
H01M 10/052; H01M 10/0525;** C01P 2002/52;
C01P 2004/03; C01P 2004/51; C01P 2004/61;
C01P 2004/62; C01P 2006/40; H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 18.10.2024  KR 20240143293
16.10.2025  KR 20250150107

(71) Applicant: SAMSUNG SDI CO., LTD.
Yongin-si, Gyeonggi-do 17084 (KR)

(72) Inventors:
• CHOI, Minjae
17084 Yongin-si (KR)
• LEE, Sangheon
17084 Yongin-si (KR)
• CHUNG, Hyunjei
17084 Yongin-si (KR)
• CHO, Yongmok
17084 Yongin-si (KR)

(74) Representative: Marks & Clerk LLP
15 Fetter Lane
London EC4A 1BW (GB)

(54) **POSITIVE ELECTRODE ACTIVE MATERIALS, AND POSITIVE ELECTRODES AND RECHARGEABLE LITHIUM BATTERIES INCLUDING THE SAME**

(57)    A positive electrode active material, and a positive electrode and a rechargeable lithium battery including the positive electrode active material are disclosed. The positive electrode active material includes a lithium cobalt-based oxide including zirconium and yttrium, wherein a content of zirconium, wherein a content of zirconium is in a range of about 0.1 wt% to about 10 wt% based on 100 wt% of a total metal excluding lithium in the lithium cobalt-based oxide, and a content of yttrium is in a range of about 0.5 wt% to about 15 wt% based on 100 wt% of a total metal excluding lithium in the lithium cobalt-based oxide.

## FIG. 5

Particle Size Distribution

— Before Pellet Density Measurement
--- After Pellet Density Measurement

Volume(%) vs Size(μm)

EP 4 733 262 A1

## Description

## BACKGROUND

### 1. Field

One or more embodiments of the present disclosure relate to positive electrode active materials and positive electrodes and rechargeable lithium batteries including the positive electrode active materials.

### 2. Description of the Related Art

Rechargeable lithium batteries, which are easy to carry as well as implement high energy density, are utilized as power sources for mobile information terminals, such as smart phones, laptops, and/or the like. Research on rechargeable lithium batteries having high energy density is being actively made for the use as a driving power source for hybrid vehicles and/or electric vehicles as well as a power storage source for energy storage systems.

The positive electrode active material utilized in rechargeable lithium batteries for portable electronic devices is mainly or predominantly lithium cobalt-based oxide, and research is being conducted to achieve high energy density.

Methods for implementing high energy density may include (i) increasing an operating voltage and (ii) increasing a mixture density of the electrode plates. In order to increase the mixture density of the electrode plates to realize or provide high energy density, the compression strength is desired to be increased during the manufacture of the electrode plates. However, there is a problem in that if (e.g., when) the compression strength is increased, cracks may occur in the positive electrode active material.

If (e.g., when) cracks occur in the positive electrode active material, a contact area with the electrolyte increases, which increases an amount of gas generated due to side reactions with the electrolyte and accelerates the deterioration of the positive electrode active material, which may result in a decrease in cycle-life characteristics of the rechargeable lithium battery.

Therefore, it is desirable to develop a positive electrode active material having improved or enhanced particle strength by suppressing cracks (or reducing a degree or occurrence of crack formation) within the positive electrode active material while implementing high energy density.

## SUMMARY

One or more aspects of embodiments of the present disclosure are directed toward a positive electrode active material having improved or enhanced particle strength by suppressing cracks (or reducing a degree or occurrence of crack formation) occurring in the positive electrode active material at high mixture density while implementing high energy density.

One or more aspects of embodiments of the present disclosure are directed toward a positive electrode and a rechargeable lithium battery having excellent or suitable electrochemical characteristics, including the positive electrode active material as described in one or more embodiments.

Additional aspects of embodiments will be set forth in part in the description which follows and, in part, will be apparent from the description or may be learned by practice of the presented embodiments of the disclosure.

According to one or more embodiments, a positive electrode active material includes a lithium cobalt-based oxide including zirconium and yttrium, wherein a content of zirconium is in a range of about 0.1 wt% to about 10 wt% based on 100 wt% of a total metal excluding lithium in the lithium cobalt-based oxide, and a content of yttrium is in a range of about 0.5 wt% to about 15 wt% based on 100 wt% of a total metal excluding lithium in the lithium cobalt-based oxide.

According to one or more embodiments, a positive electrode includes a positive electrode current collector; and a positive electrode active material layer disposed or provided on the positive electrode current collector and including the positive electrode active material as described in one or more embodiments.

A rechargeable lithium battery according to one or more embodiments includes the positive electrode as described in one or more embodiments, a negative electrode, and an electrolyte.

At least some of the above and other features of the invention are set out in the claims.

According to one or more embodiments, the positive electrode active material may realize or provide high energy density while suppressing cracks (or reducing a degree or occurrence of crack formation) occurring in the positive electrode active material at high mixture density, thereby improving or enhancing particle strength.

The positive electrode and the rechargeable lithium battery according to one or more embodiments may have excellent or suitable electrochemical characteristics by including the positive electrode active material as described in one or more embodiments.

## BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.

FIGS. 1-4 are schematic views illustrating a rechargeable lithium battery according to one or more embodiments.
FIG. 5 is a graph of particle size distribution before and after measuring the pellet density of the positive electrode active material according to Example 4.
FIG. 6 is a graph of particle size distribution before and after measuring the pellet density of the positive electrode active material according to Comparative Example 1.
FIG. 7 is a scanning electron microscope (SEM) image of a cross-section of the positive electrode according to Example 4.
FIG. 8 is a scanning electron microscope (SEM) image of a cross-section of the positive electrode according to Comparative Example 1.

## DETAILED DESCRIPTION

The subject matter of the present disclosure will be described more fully hereinafter with reference to the accompanying drawings, in which embodiments of the present disclosure are shown. As those skilled in the art would realize, the described embodiments may be modified in one or more suitable different ways, all without departing from the scope of the present disclosure. The drawings and description are to be regarded as illustrative in nature and not restrictive. Like reference numerals designate like elements throughout the attached drawings and the written description, and duplicative descriptions thereof may not be provided in the specification.

The terminology used herein is used to describe one or more embodiments of the present disclosure only and is not intended to limit the scope of the present disclosure.

The utilization of "may" if (e.g., when) describing embodiments of the present disclosure refers to "one or more embodiments of the present disclosure."

In the context of the present application and unless otherwise defined, the terms "use," "using," and "used" may be considered synonymous with the terms "utilize," "utilizing," and "utilized," respectively.

As used herein, the singular forms "a," "an," and "the" are intended to include the plural forms as well, unless the context clearly indicates otherwise. The singular expression includes the plural expression unless the context clearly dictates otherwise.

As used herein, the term "and/or" or "or" includes any and all combinations of one or more of the associated listed items. For example, "or" is not to be construed as an exclusive meaning, for example, "A or B" is construed to include A, B, A+B, and/or the like.

Throughout the present disclosure, the expressions, such as "at least one of," "one of," and "selected from," if (e.g., when) preceding a list of elements, modify the entire list of elements and do not modify the individual elements of the list. For example, "at least one of a, b, or c," "at least one selected from among a, b, and c," "at least one selected from among a to c," and/or the like indicates only a, only b, only c, both (e.g., simultaneously) a and b, both (e.g., simultaneously) a and c, both (e.g., simultaneously) b and c, all of a, b, and c, or variations thereof.

As utilized herein, the terms "substantially," "about," or similar terms are used as terms of approximation and not as terms of degree and are intended to account for the inherent deviations in measured or calculated values that would be recognized by those of ordinary skill in the art. "About" as used herein is inclusive of the stated value and refers to as being within an acceptable range of deviation for the particular value as determined by one of ordinary skill in the art, considering the measurement in question and the error associated with measurement of the particular quantity (e.g., the limitations of the measurement system). For example, "about" may refer to as being within one or more standard deviations or within $\pm30\%$, $\pm20\%$, $\pm10\%$, or $\pm5\%$ of the stated value. Also, it should be understood that, even if (e.g., when) the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in the present disclosure is intended to include all higher numerical limitations subsumed therein.

As used herein, "combination thereof" refers a mixture, a laminate, a composite, a copolymer, an alloy, a blend, a reaction product, and/or the like of the constituents.

Herein, it should be understood that the terms, such as "includes," "including," "has," or "having," are intended to designate the presence of an embodied feature, number, step, element, or a combination thereof, but they do not preclude the possibility of the presence or addition of one or more other features, numbers, steps, elements, or a combination thereof. For example, it should be understood that the terms "comprise(s)/comprising," "include(s)/including," or "have/has/having" specify the presence of stated features, integers, steps, operations, elements, and/or components, but do not preclude the presence or addition of one or more other features, integers, steps, operations, elements, components, and/or groups thereof. Also, the terms "comprise(s)/comprising," "include(s)/including," "have/has/having," or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

In the drawings, the thickness of layers, films, panels, regions, and/or the like may be exaggerated for clarity.

It will be understood that if (e.g., when) an element, such as a layer, a film, a region, or a substrate, is referred to as being "on" another element, it may be directly on the other element or intervening elements may also be present therebetween. In contrast, if (e.g., when) an element is referred to as being "directly on" another element, there are no intervening elements present therebetween.

The term "layer" herein includes not only a shape formed on the whole surface if (e.g., when) viewed from a plan view, but also a shape formed on a partial surface.

The average particle diameter may be measured by any suitable method that is generally available to or generally used by those skilled in the art, for example, by a particle size analyzer and/or by a transmission electron microscope (TEM) image and/or a scanning electron microscope (SEM) image. Also, it may be feasible to obtain an average particle diameter value by measuring using a dynamic light scattering method, performing data analysis, counting the number of particles for each particle size range, and calculating from this data. Unless otherwise defined, the average particle diameter ($D_{50}$) may refer to the diameter of particles having a cumulative volume of 50 volume% in the particle size distribution. As used herein, if (e.g., when) a definition is not otherwise provided, the average particle diameter ($D_{50}$) refers to a diameter of particles having a cumulative volume of 50 volume% in the particle size distribution that is obtained by measuring the size (e.g., diameter or major axis length) of about 20 particles at random in a scanning electron microscope image.

"Metal" is interpreted as a concept including ordinary metals, transition metals, and metalloids (semi-metals).

**Positive Electrode Active Material**

In one or more embodiments, a positive electrode active material may include a lithium cobalt-based oxide including zirconium and yttrium, wherein a content of zirconium in the lithium cobalt-based oxide is in a range of about 0.1 wt% to about 10 wt% based on 100 wt% of a total metal excluding lithium in the lithium cobalt-based oxide, and a content of yttrium in the lithium cobalt-based oxide is in a range of about 0.5 wt% to about 15 wt% based on 100 wt% of a total metal excluding lithium in the lithium cobalt-based oxide. The content of the metal (e.g., zirconium and yttrium) in the lithium cobalt-based oxide may be measured by inductively coupled plasma (ICP) spectroscopy.

In order to realize or provide high energy density of rechargeable lithium batteries, it is advantageous or beneficial to manufacture a positive electrode having a high mixture density. However, there is a problem that if (e.g., when) the positive electrode is strongly or substantially compressed to have a high mixture density, cracks may occur in the positive electrode active material, which causes a connection of the electrically conductive path to be disconnected or a reaction area with the electrolyte to increase, resulting in gas generation and, as a result, a deterioration in the electrochemical performance of the rechargeable lithium battery.

If (e.g., when) lithium cobalt-based oxide is doped with an appropriate or suitable amount of zirconium, it may exhibit excellent or suitable properties in terms of resistance (e.g., resistance to the formation of cracks, the generation of gas, a deterioration in the electrochemical performance, and/or the like), and if (e.g., when) it is doped with an appropriate or suitable amount of yttrium, it may exhibit excellent or suitable properties in terms of grain strength by becoming a single crystal through grain growth. In one or more embodiments of the present disclosure, zirconium and yttrium elements are doped into a lithium cobalt-based oxide in the doping amounts as described in one or more embodiments to provide a positive electrode active material according to one or more embodiments which has improved or enhanced particle strength, thereby suppressing crack occurrence (or reducing a degree or occurrence of crack formation) even at a high mixture density, and concurrently (e.g., simultaneously) realizing or providing high energy density.

For example, based on 100 wt% of a total metal excluding lithium in the lithium cobalt-based oxide, the content of zirconium in the lithium cobalt-based oxide is in a range of about 0.1 wt% to about 9 wt%, about 0.1 wt% to about 8 wt%, about 0.1 wt% to about 7 wt%, about 0.5 wt% to about 7 wt%, about 0.5 wt% to about 6 wt%, about 0.1 wt% to about 5 wt%, about 0.5 wt% to about 5 wt%, about 1 wt% to about 5 wt%, about 1.5 wt% to about 4.5 wt%, or about 1 wt% to about 3 wt%. If (e.g., when the content of zirconium in the lithium cobalt-based oxide satisfies the foregoing ranges, the resistance (e.g., the resistance to the formation of cracks, the generation of gas, a deterioration in the electrochemical performance, and/or the like) may be excellent or suitable without causing a decrease in capacity or a decrease in cycle-life of a rechargeable lithium battery.

In one or more embodiments, based on 100 wt% of a total metal excluding lithium in the lithium cobalt-based oxide, the content of yttrium in the lithium cobalt-based oxide is in a range of about 0.5 wt% to about 14 wt%, about 0.5 wt% to about 13 wt%, about 0.5 wt% to about 12 wt%, about 0.5 wt% to about 11 wt%, about 0.5 wt% to about 10 wt%, about 1 wt% to about 10 wt%, about 1.5 wt% to about 10 wt%, about 1.5 wt% to about 9 wt%, about 2 wt% to about 9 wt%, about 2 wt% to about 8.5 wt%, about 1 wt% to about 8 wt%, about 1 wt% to about 7 wt%, about 1 wt% to about 6 wt%, or about 1.5 wt% to about 5.5 wt%. If (e.g., when) the content of yttrium in the lithium cobalt-based oxide satisfies the foregoing ranges, the particle strength may be improved or enhanced without causing a decrease in capacity of a rechargeable lithium battery, thereby suppressing the occurrence of cracks (or reducing a degree or occurrence of crack formation).

If (e.g., when) the content of the zirconium and the content of the yttrium satisfy the foregoing ranges, the lithium cobalt-based oxide may be doped with other metal elements in addition to zirconium and yttrium.

For example, the lithium cobalt-based oxide may be represented by Chemical Formula 1.

$$\text{Chemical Formula 1} \qquad Li_{a1}Co_{x1}Zr_{y1}Y_{z1}M^1{}_{w1}O_{2-b1}$$

In Chemical Formula 1, $0.8 \leq a1 \leq 1.2$, $0.85 \leq x1 \leq 0.99$, $0.001 \leq y1 \leq 0.05$, $0.005 \leq z1 \leq 0.1$, $0 \leq w1 \leq 0.1$, $0.856 \leq x1+y1+z1+w1 \leq 1.24$, $0 \leq b1 \leq 0.05$, and $M^1$ may be aluminium (Al), boron (B), barium (Ba), calcium (Ca), cerium (Ce), chromium (Cr), copper (Cu), fluorine (F), iron (Fe), magnesium (Mg), manganese (Mn), molybdenum (Mo), niobium (Nb), phosphorus (P), sulfur (S), silicon (Si), strontium (Sr), vanadium (V), tungsten (W), zinc (Zn), or a combination thereof.

The Chemical Formula 1 may represent $LiCoO_2$ (LCO), e.g., lithium cobalt-based oxide doped with zirconium and yttrium. The $M^1$ may also refer to a doping element and may refer to that it may be doped with the types or kinds as described in one or more embodiments except for zirconium and yttrium.

In one or more embodiments, $M^1$ of Chemical Formula 1 may be Al. For example, the lithium cobalt-based oxide may further be doped with aluminium. That is, the lithium cobalt-based oxide may further include aluminium.

For example, a content of aluminium in the lithium cobalt-based oxide may be in a range of about 0.1 wt% to about 5 wt% based on 100 wt% of a total metal excluding lithium in the lithium cobalt-based oxide. The content of aluminium in the lithium cobalt-based oxide may be, for example, in range of about 0.5 wt% to about 5 wt%, about 0.5 wt% to about 4 wt%, about 0.5 wt% to about 3 wt%, about 1 wt% to about 3 wt%, about 1 wt% to about 2 wt%, or about 1.5 wt% to about 2 wt%. If (e.g., when) the content of aluminium in the lithium cobalt-based oxide satisfies the foregoing ranges, the high-temperature cycle-life may be improved or enhanced through structural reinforcement of the positive electrode active material, and capacity degradation of a rechargeable lithium battery may not occur.

For example, a content of zirconium in the lithium cobalt-based oxide may be in a range of about 0.1 mol% to about 5 mol%, about 0.5 mol% to about 5 mol%, or about 1 mol% to about 5 mol% based on 100 mol% of a total metal excluding lithium in the lithium cobalt-based oxide.

For example, a content of yttrium in the lithium cobalt-based oxide may be in a range of about 0.5 mol% to about 10 mol%, about 0.5 mol% to about 9 mol%, about 0.5 mol% to about 8 mol%, about 0.5 mol% to about 7 mol%, about 1 mol% to about 7 mol%, or about 1 mol% to about 6 mol% based on 100 mol% of a total metal excluding lithium in the lithium cobalt-based oxide.

For example, a content of aluminium in the lithium cobalt-based oxide may be in a range of about 0.1 mol% to about 10 mol%, about 0.1 mol% to about 9 mol%, about 0.1 mol% to about 8 mol%, about 0.1 mol% to about 7 mol%, about 0.1 mol% to about 6 mol%, about 0.5 mol% to about 6 mol%, about 1 mol% to about 6 mol%, about 2 mol% to about 6 mol%, about 3 mol% to about 6 mol%, or about 3 mol% to about 5 mol% based on 100 mol% of a total metal excluding lithium in the lithium cobalt-based oxide.

The positive electrode active material may be in the form of particles, and the average particle diameter ($D_{50}$) of the particles may be, for example, in a range of about 1 μm to about 30 μm.

For example, the positive electrode active material may be small particles, large particles, or a mixture of the small particles and the large particles. An average particle diameter ($D_{50}$) of the large particles may be in a range of about 9 μm to about 25 μm, and an average particle diameter ($D_{50}$) of the small particles may be in a range of about 0.5 μm to about 8 μm. The average particle diameter ($D_{50}$) of the large particles may be, for example, in a range of about 10 μm to about 20 μm or about 14 μm to about 17 μm, and the average particle diameter ($D_{50}$) of the small particles may be, for example, in a range of about 1 μm to about 6 μm or about 3 μm to about 6 μm. If (e.g., when) the positive electrode active material is a mixture of the small particles and the large particles, a weight ratio of the small particles to the large particles in the mixture of the small particles and the large particles may be in a ratio of about 50:50 to about 10:90, about 40:60 to about 10:90, or about 30:70 to about 10:90. If (e.g., when) the weight ratio of the small particles to the large particles in the mixture of the small particles and the large particles satisfies the foregoing ranges, cycle-life characteristics may be improved or enhanced while maximizing or enhancing the capacity and energy density of a rechargeable lithium battery. In one or more embodiments, the positive electrode active material may be a mixture of small particles and large particles, and the average particle diameter ($D_{50}$) thereof may be in a range of about 14 $\mu$m to about 17 $\mu$m.

The shape of the positive electrode active material particles may be irregular, spherical (e.g., substantially spherical), elliptical (e.g., substantially elliptical), and/or the like.

The pellet density of the positive electrode active material as described in one or more embodiments may be greater than or equal to about 4.2 g/cc (e.g. about 4.21 g/cc to about 4.23 g/cc). The pellet density (also referred to as compression density) is a comparison showing whether the electrode density can be designed high if (e.g., when) forming or providing an electrode having a positive electrode active material. For example, the pellet density (also referred to as compression density) indicates whether a high electrode density can be achieved if (e.g., when) forming or providing a positive electrode utilizing the positive electrode active material. If (e.g., when) compressed at substantially the same pressure, the higher the pellet density value, the higher the electrode density may be designed. The pellet density of the positive electrode active material may be measured using substantially the same method as described in "(1) Pellet Density Measurement" of Evaluation Example 1. Because the positive electrode active material has a pellet density within the foregoing ranges, a positive electrode having a high mixture density may be manufactured, thereby realizing or providing a high energy density.

According to one or more embodiments, a lithium cobalt-based oxide as described herein may have improved or enhanced particle strength, compared to the lithium cobalt-based oxides that are generally available or generally used, by doping zirconium and yttrium in appropriate or suitable doping amounts. The improvement or enhancement in particle strength of the positive electrode active material may be confirmed by the fact that almost or substantially no fine powder occurs if (e.g., when) the particle size is analyzed after measuring the pellet density. Herein, the fine powder may refer to particles having a size of less than or equal to about 1 $\mu$m. If (e.g., when) measuring the pellet density of lithium cobalt-based oxide particles and conducting particle size analysis, cracks may be generated due to the compression strength at the time of measuring the pellet density, and thus, fine powder may be generated.

According to one or more embodiments, if (e.g., when) the particle size of a positive electrode active material is analyzed after measuring the pellet density, almost or substantially no fine powder may be generated. For example, in the particle size distribution for the positive electrode active material according to one or more embodiments, particles having a size of less than or equal to about 1 $\mu$m may be less than 1 volume%. If (e.g., when) the particle size analysis indicates that fine powder, for example, particles of less than or equal to about 1 $\mu$m, are present at less than 1 volume%, it may be seen that cracks hardly occur (or a degree or occurrence of crack formation is reduced). The particles having a size of less than or equal to about 1 $\mu$m may be less than or equal to about 0.9 volume%, less than or equal to about 0.8 volume%, less than or equal to about 0.7 volume%, less than or equal to about 0.6 volume%, less than or equal to about 0.5 volume%, less than or equal to about 0.4 volume%, or less than or equal to about 0.3 volume%, and may be 0 volume%. According to one or more embodiments, a positive electrode active material may suppress crack occurrence (or reduce a degree or occurrence of crack formation) even at a high mixture density by doping zirconium and yttrium in appropriate or suitable doping amounts. Herein, analyzing the particle size after measuring the pellet density may refer to, for example, analyzing the particle size after pressurizing the positive electrode active material powder at a pressure of 3 tons. Also, the particle size may be analyzed using a particle size analyzer, for example, using laser diffraction. For example, the positive electrode active material powder may be dispersed in a dispersion medium, placed in a commercially available laser diffraction particle size measurement device (e.g., MT 3000 from Microtrac), irradiated with ultrasonic waves of about 28 kHz at an output of about 60 W, and the particle size distribution may be analyzed by deriving the cumulative volume according to the size of the particles. In one or more embodiments, the size of the particle may refer to the diameter or the major axis length of the particle.

The method for preparing the positive electrode active material is not specifically limited and may be prepared by a method that is generally available or generally used.

First, a mixture may be prepared by mixing a cobalt precursor, a lithium precursor, and a metal precursor to be doped (e.g., a zirconium precursor, an yttrium precursor, an aluminium precursor, and/or the like). precursor, and the metal precursor to be doped while stoichiometrically controlling the mixing ratio so as to obtain a lithium cobalt-based oxide.

In addition to the zirconium precursor, the yttrium precursor, and the aluminium precursor, a precursor of a doping metal that is generally available or generally used may further be added as the metal precursor. The cobalt precursor may be one or more selected from among cobalt carbonate, cobalt hydroxide, cobalt chloride, cobalt sulfate, cobalt nitrate, and cobalt oxide.

The cobalt precursor may be in the form of particles, and the average particle diameter ($D_{50}$) of the particles may be, for example, in a range of about 1 $\mu$m to about 30 $\mu$m. For example, the cobalt precursor may be small particles or large particles. The average particle diameter ($D_{50}$) of the large particles may be in a range of about 9 $\mu$m to about 25 $\mu$m, and the

average particle diameter ($D_{50}$) of the small particles may be in a range of about 0.5 μm to about 8 μm. The average particle diameter ($D_{50}$) of the large particles may be, for example, in a range of about 10 μm to about 20 μm or about 14 μm to about 17 μm, and the average particle diameter ($D_{50}$) of the small particles may be, for example, in a range of about 1 μm to about 6 μm or about 3 μm to about 6 μm. If (e.g., when) the large particles or the small particles having an average particle diameter ($D_{50}$) of the cobalt precursor satisfying the foregoing ranges are utilized, a lithium cobalt-based oxide having a desired size may be prepared, and at the same time (e.g., concurrently), the capacity of a rechargeable lithium battery may be excellently or suitably secured. Herein, if (e.g., when) the lithium cobalt-based oxide is a mixture of large particles and small particles, the cobalt precursor of the large particles may be utilized to prepare the lithium cobalt-based oxide of the large particles, and the cobalt precursor of the small particles may be utilized to prepare the lithium cobalt-based oxide of the small particles, and these may be mixed.

The lithium precursor may be one or more selected from among lithium hydroxide (LiOH), lithium carbonate ($Li_2CO_3$), lithium chloride, lithium sulfate ($Li_2SO_4$), and lithium nitrate ($LiNO_3$). The aluminium precursor may be one or more selected from among aluminium sulfate, aluminium chloride, and aluminium hydroxide. The zirconium precursor, the yttrium precursor, and the aluminium precursor each may be at least one selected from among a hydroxide, a chloride, a sulfate, and an oxide including zirconium, yttrium and aluminium, respectively.

The mixing may be performed by dry mixing, such as mechanical mixing, using a ball mill, a Banbury mixer, a homogenizer, a Hensel mixer, and/or the like. The dry mixing may reduce preparation costs compared to wet mixing.

Subsequently, the mixture may be subjected to heat treatment in an air or oxygen atmosphere to obtain a lithium cobalt-based oxide. The heat treatment is not specifically limited, but may be performed in the temperature range of, for example, about 900 °C to about 1050 °C. Herein, the oxygen atmosphere may be formed or provided by using oxygen alone or by using oxygen, nitrogen, and an inert gas together. Heat treatment time varies depending on the heat treatment temperature. For example, the heat treatment may be performed at the heat treatment temperature for about 10 to about 20 hours.

## Positive Electrode

According to one or more embodiments, a positive electrode includes a positive electrode current collector; and a positive electrode active material layer disposed or provided on the positive electrode current collector and including the positive electrode active material as described in one or more embodiments. According to one or more embodiments, the positive electrode may exhibit excellent or suitable electrochemical characteristics because it may suppress crack occurrence (or reduce a degree or occurrence of crack formation) by improving or enhancing particle strength even at a high mixture density and concurrently (e.g., simultaneously) implement high energy density.

## Positive Electrode Current Collector

The positive electrode current collector is not particularly limited as long as it has conductivity (e.g., electrical conductivity) and does not cause a chemical change (e.g., an undesirable chemical change) in the rechargeable lithium battery, and may be an aluminium foil having a thickness of about 10 μm to about 15 μm.

## Positive Electrode Active Material Layer

The positive electrode active material layer includes the positive electrode active material as described in one or more embodiments.

The positive electrode active material includes a lithium cobalt-based oxide including zirconium and yttrium, wherein a content of zirconium is in a range of about 0.1 wt% to about 10 wt% based on 100 wt% of a total metal excluding lithium in the lithium cobalt-based oxide, and a content of yttrium for the lithium cobalt-based oxide is in a range of about 0.5 wt% to about 15 wt% based on 100 wt% of a total metal excluding lithium in the lithium cobalt-based oxide. Because the details of the positive electrode active material are substantially the same as the details as described in one or more embodiments, they may not be provided.

An amount of the positive electrode active material may be in a range of about 60 wt% to about 99.9 wt%, about 70 wt% to about 99.8 wt%, about 80 wt% to about 99 wt%, about 90 wt% to about 99.8 wt%, or about 95 wt% to about 99 wt% based on 100 wt% of the positive electrode active material layer.

The positive electrode active material layer may further include a first positive electrode active material, which is a positive electrode active material that is generally used in rechargeable lithium batteries, in addition to the positive electrode active material as described in one or more embodiments. The first positive electrode active material may further include one or more selected from among a lithium cobalt-based oxide, a lithium nickel cobalt manganese-based oxide, a lithium nickel cobalt aluminium-based oxide, a lithium iron phosphate-based compound, and a lithium manganese-based oxide, but embodiments of the present disclosure are not limited thereto, and any suitable positive electrode active material that is generally available in the art may be utilized. For example, a compound represented by any one of the chemical formulas may be utilized: $Li_aA_{1-b}B'_bD_2$ (wherein $0.90 \leq a \leq 1.8$ and $0 \leq b \leq 0.5$); $Li_aE_{1-b}B'_bO_{2-c}D_c$ (wherein $0.90 \leq a \leq 1.8$, $0 \leq b \leq 0.5$, and $0 \leq c \leq 0.05$); $LiE_{2-b}B'_bO_{4-c}D_c$ (wherein $0 \leq b \leq 0.5$ and $0 \leq c \leq 0.05$); $Li_aNi_{1-b-c}Co_bB'_cD_\alpha$ (wherein $0.90 \leq a \leq 1.8$, $0 \leq b \leq 0.5$, $0 \leq c \leq 0.05$, and $0 < \alpha \leq 2$); $Li_aNi_{1-b-c}Co_bB'_cO_{2-\alpha}F'_\alpha$ (wherein $0.90 \leq a \leq 1.8$, $0 \leq b \leq 0.5$, $0 \leq c \leq 0.05$, and $0 < \alpha < 2$); $Li_aNi_{1-b-c}Mn_bB'_cD_\alpha$ (wherein $0.90 \leq a \leq 1.8$, $0 \leq b \leq 0.5$, $0 \leq c \leq 0.05$, and $0 < \alpha < 2$); $Li_aNi_{1-b-c}Mn_bB'_cO_{2-\alpha}F'_\alpha$ (wherein $0.90 \leq a \leq 1.8$, $0 \leq b \leq 0.5$, $0 \leq c \leq 0.05$, and $0 < \alpha < 2$); $Li_aNi_bE_cG_dO_2$ (wherein $0.90 \leq a \leq 1.8$, $0 \leq b \leq 0.9$, $0 \leq c \leq 0.5$, and $0.001 \leq d \leq 0.1$); $Li_aNi_bCo_cMn_dG_eO_2$ (wherein $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (wherein $0.90 \leq a \leq 1.8$ and $0.001 \leq b \leq 0.1$); $Li_aCoG_bO_2$ (wherein $0.90 \leq a \leq 1.8$ and $0.001 \leq b \leq 0.1$); $Li_aMnG_bO_2$ (wherein $0.90 \leq a \leq 1.8$ and $0.001 \leq b \leq 0.1$); $Li_aMn_2G_bO_4$ (wherein $0.90 \leq a \leq 1.8$ and $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ (wherein $0 \leq f \leq 2$); $Li_{(3-f)}Fe_2(PO_4)_3$ (wherein $0 \leq f \leq 2$); or $LiFePO_4$. In the foregoing chemical formulas, A may be Ni, Co, Mn, or a combination thereof; B' may be Al, Ni, Co, Mn, Cr, Fe, Mg, Sr, V, a rare earth element, or a combination thereof; D may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof.

The positive electrode active material layer may optionally further include a binder, a conductive (e.g., electrically conductive) material, or a combination thereof.

The binder may improve or enhance binding properties of positive electrode active material particles with one another and with a positive electrode current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but embodiments of the present disclosure are not limited thereto.

The conductive material may provide electrode conductivity (e.g., electrical conductivity) and any suitable electrically conductive material may be utilized as a conductive (e.g., electrically conductive) material unless it causes a chemical change (e.g., an undesirable chemical change). Examples of the conductive material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminium, silver, and/or the like; a conductive (e.g., electrically conductive) polymer, such as polyphenylene and/or a polyphenylene derivative; or a mixture thereof.

In the positive electrode active material layer as described in one or more embodiments, an amount of the binder may be in a range of about 0.1 wt% to about 5 wt% based on 100 wt% of the positive electrode active material layer, and an amount of the conductive (e.g., electrically conductive) material may be in a range of about 0.1 wt% to about 5 wt% based on 100 wt% of the positive electrode active material layer.

A weight per unit area of the positive electrode active material layer formed or provided on the positive electrode current collector in the positive electrode (also referred to as "a loading level of the positive electrode active material layer") is not specifically limited, but may be, for example, in a range of about 10 mg/cm² to about 30 mg/cm². The weight per unit area of the positive electrode active material layer formed or provided on the positive electrode current collector in the positive electrode may be in a range of about 15 mg/cm² to about 25 mg/cm², about 10 mg/cm² to about 20 mg/cm², or about 15 mg/cm² to about 18 mg/cm².

A mixture density of the positive electrode active material layer after compression may be in a range of about 4.1 g/cc to about 4.25 g/cc, about 4.15 g/cc to about 4.25 g/cc, or about 4.17 g/cc to about 4.25 g/cc. The mixture density refers to a weight per unit volume of the positive electrode active material layer formed or provided on the positive electrode current collector in the positive electrode. The positive electrode active material layer may include the positive electrode active material as described in one or more embodiments having improved or enhanced particle strength, thereby suppressing the occurrence of cracks (or reducing a degree or occurrence of crack formation) within the positive electrode active material even at a high mixture density within the foregoing range, while concurrently (e.g., simultaneously) realizing or providing high energy density.

A thickness of the positive electrode active material layer as described in one or more embodiments may be in a range of about 20 μm to about 200 μm. For example, the thickness of the positive electrode active material layer may be in a range of about 20 μm to about 150 μm, about 25 μm to about 100 μm, or about 30 μm to about 50 μm. The thickness of the positive electrode active material layer may be measured through SEM images of the cross-section of the compressed positive electrode.

**Rechargeable Lithium Battery**

A rechargeable lithium battery according to one or more embodiments includes the positive electrode as described in one or more embodiments, a negative electrode, and an electrolyte.

The rechargeable lithium battery may include a positive electrode, a negative electrode, a separator between the positive electrode and the negative electrode, and an electrolyte.

In one or more embodiments, an all-solid-state rechargeable battery may include the positive electrode, a negative electrode, and a solid electrolyte layer between the positive electrode and the negative electrode.

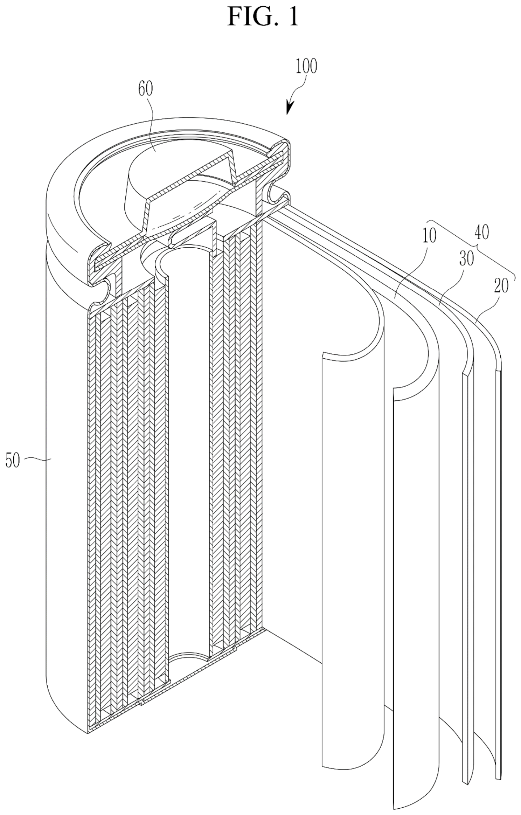

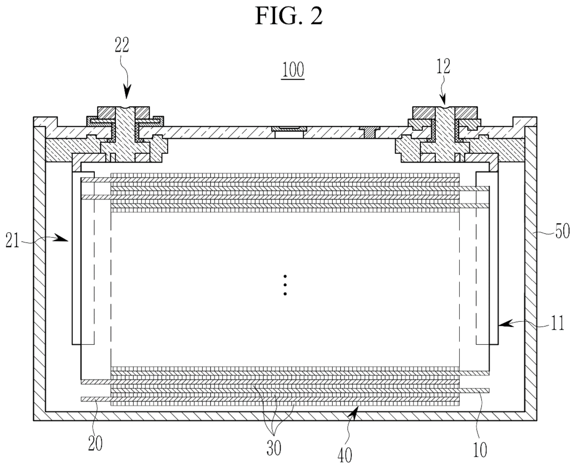

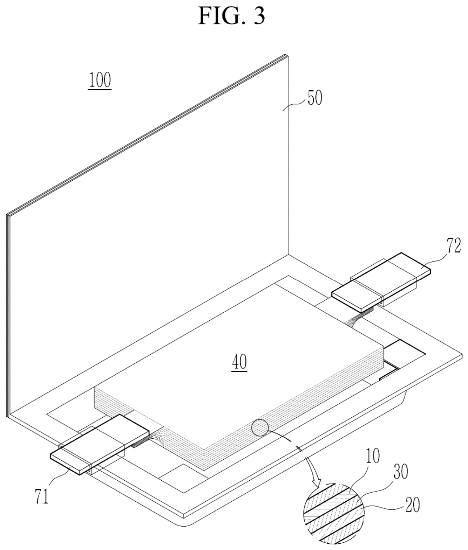

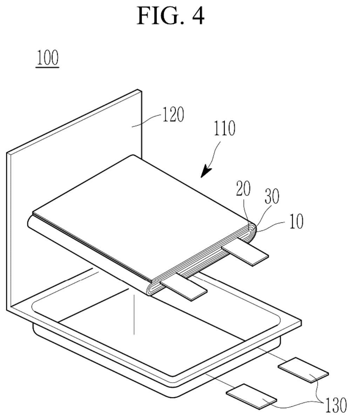

The rechargeable lithium battery may be classified into a cylindrical battery, a prismatic battery, a pouch-shaped battery, a coin battery, and/or the like depending on the shape. FIGS. 1 to 4 are schematic views illustrating the rechargeable lithium battery according to one or more embodiments, where FIG. 1 is a cylindrical battery, FIG. 2 is a prismatic battery, and FIGS. 3 and 4 are a pouch-shaped battery. Referring to FIGS. 1 to 4, a rechargeable lithium battery 100 may include an electrode assembly 40 having a separator 30 between the positive electrode 10 and the negative electrode 20, and a case 50 in which the electrode assembly 40 is housed. The positive electrode 10, the negative electrode 20, and the separator 30 may be impregnated with an electrolyte. The rechargeable lithium battery 100 may include a sealing member 60 that seals the case 50 as illustrated in FIG. 1. In FIG. 2, the rechargeable lithium battery 100 may include a positive electrode lead tab 11, a positive electrode terminal 12, a negative electrode lead tab 21, and a negative electrode terminal 22. As illustrated in FIGS. 3 and 4, the rechargeable lithium battery 100 may include an electrode tab 70, for example, a positive electrode tab 71 and a negative electrode tab 72 serving as an electrical path to induce the current formed in the electrode assembly 40 to the outside.

Hereinafter, each component that constitutes a rechargeable lithium battery is described in more detail.

The positive electrode is substantially the same as the positive electrode as described in one or more embodiments, and thus the description thereof may not be provided, and the negative electrode, the electrolyte, and the separator are described sequentially in more detail.

**Negative Electrode**

A negative electrode for a rechargeable lithium battery may include a negative electrode current collector and a negative electrode active material layer on the negative electrode current collector. The negative electrode active material layer may include a negative electrode active material and may optionally further include a binder, a conductive (e.g., electrically conductive) material, or a combination thereof.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous (e.g., non-crystalline) carbon, or a combination thereof as a carbon-based negative electrode active material. The crystalline carbon may be irregular, or sheet (e.g., substantially sheet), flake (e.g., substantially flake), spherical (e.g., substantially spherical), or fiber (e.g., substantially fiber) shaped natural graphite or artificial graphite. The amorphous carbon may be a soft carbon, a hard carbon, a mesophase pitch carbonization product, calcined coke, and/or the like.

The lithium metal alloy may include an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ (wherein $0 < x \leq 2$; e.g., $SiO_2$), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and a combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, $SnO_k$ (wherein $0 < k \leq 2$; e.g., $SnO_2$), a Sn alloy, or a combination thereof.

The silicon-carbon composite may be a composite of silicon and amorphous (e.g., non-crystalline) carbon. An average particle diameter ($D_{50}$) of the silicon-carbon composite particles may be, for example, in a range of about 0.5 μm to about 20 μm. According to one or more embodiments, the silicon-carbon composite may be in the form of silicon particles and amorphous (e.g., non-crystalline) carbon coated on the surface of the silicon particles. For example, it may include a secondary particle (core) in which silicon primary particles are assembled and an amorphous (e.g., non-crystalline) carbon coating layer (shell) on the surface of the secondary particle. The amorphous carbon may also be present between the silicon primary particles, for example, the silicon primary particles may be coated with amorphous (e.g., non-crystalline) carbon. The secondary particles may exist dispersed in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on the surface of the core. The crystalline carbon may be artificial graphite, natural graphite, or a combination thereof. The amorphous carbon may include soft carbon, hard carbon, a mesophase pitch carbonized product, and/or calcined coke.

If (e.g., when) the silicon-carbon composite includes silicon and amorphous (e.g., non-crystalline) carbon, a content (e.g., amount) of silicon may be in a range of about 10 wt% to about 50 wt% and a content (e.g., amount) of amorphous (e.g., non-crystalline) carbon may be in a range of about 50 wt% to about 90 wt% based on 100 wt% of the silicon-carbon composite. In one or more embodiments, if (e.g., when) the silicon-carbon composite includes silicon, amorphous (e.g., non-crystalline) carbon, and crystalline carbon, a content (e.g., amount) of silicon may be in a range of about 10 wt% to about 50 wt%, a content (e.g., amount) of crystalline carbon may be in a range of about 10 wt% to about 70 wt%, and a content (e.g., amount) of amorphous (e.g., non-crystalline) carbon may be in a range of about 20 wt% to about 40 wt% based on 100 wt% of the silicon-carbon composite.

In one or more embodiments, a thickness of the amorphous carbon coating layer may be in a range about 5 nm to about 100 nm. An average particle diameter ($D_{50}$) of the silicon particles (primary particles) may be in a range of about 10 nm to about 1 $\mu$m or about 10 nm to about 200 nm. The silicon particles may exist as silicon alone, in the form of a silicon alloy, or in an oxidized form of silicon. The oxidized form of silicon may be represented by $SiO_x$ (wherein $0 < x \leq 2$; e.g., $SiO_2$). At this time, the atomic content (e.g., amount) ratio of Si:O, which indicates a degree of oxidation, may be in a range of about 99:1 to about 33:67. As used herein, if (e.g., when) a definition is not otherwise provided, an average particle diameter ($D_{50}$) indicates a diameter of a particle where a cumulative volume is about 50 volume% in a particle size distribution.

The Si-based negative electrode active material or Sn-based negative electrode active material may be mixed with the carbon-based negative electrode active material. If (e.g., when) the Si-based negative electrode active material or Sn-based negative electrode active material and the carbon-based negative electrode active material are mixed and utilized, the mixing ratio may be a weight ratio of about 1:99 to about 90:10.

The negative electrode active material may be in an amount of about 90 wt% to about 99.8 wt% or about 94 wt% to about 99 wt% based on 100 wt% of the negative electrode active material layer.

The binder may serve to well or suitably adhere the negative electrode active material particles to each other and also to adhere the negative electrode active material to the negative electrode current collector. The binder may be a non-aqueous (e.g., water-insoluble) binder, an aqueous (e.g., water-soluble) binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If (e.g., when) an aqueous (e.g., water-soluble) binder is utilized as the binder in the negative electrode active material layer, a cellulose-based compound capable of imparting or increasing viscosity may further be included. As the cellulose-based compound, one or more of carboxymethyl cellulose, hydroxypropyl methylcellulose, methyl cellulose, or alkali metal salts thereof may be mixed and utilized. The alkali metal may be Na, K, or Li.

The dry binder may be a polymer material capable of becoming a fiber, and may be, for example, polytetrafluoroethylene, polyvinylidene fluoride, a polyvinylidene fluoride-hexafluoropropylene copolymer, polyethylene oxide, or a combination thereof.

The conductive material may be included to provide electrode conductivity (e.g., electrical conductivity), and any suitable electrically conductive material may be utilized as a conductive (e.g., electrically conductive) material unless it causes a chemical change (e.g., an undesirable chemical change). Examples of the conductive material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminium, silver, and/or the like; a conductive (e.g., electrically conductive) polymer, such as polyphenylene and/or a polyphenylene derivative; or a mixture thereof.

An amount of the binder may be in a range of about 0.1 wt% to about 5 wt% based on 100 wt% of the negative electrode active material layer, and an amount of the conductive material may be in a range of about 0.1 wt% to about 5 wt% based on 100 wt% of the negative electrode active material layer.

The negative electrode current collector is not particularly limited as long as it has conductivity (e.g., electrical conductivity) and does not cause a chemical change (e.g., an undesirable chemical change) in the rechargeable lithium battery, and may be a copper foil having a thickness of about 10 $\mu$m to about 15 $\mu$m.

**Electrolyte**

The electrolyte for a rechargeable lithium battery may be an electrolyte solution, which may include a non-aqueous (e.g., water-insoluble) organic solvent and a lithium salt.

The non-aqueous organic solvent may serve as a medium to transmit ions taking part in the electrochemical reaction of a rechargeable lithium battery. The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include ethyl methyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethanol, isopropyl alcohol, and/or the like, and the aprotic solvent may include nitriles, such as R-CN (wherein R is a C2 to C20 linear, branched, or cyclic hydrocarbon group, a double bond, an aromatic ring, or an ether bond, and/or the like); amides, such as dimethylformamide; dioxolanes, such as 1,3-dioxolane, 1,4-dioxolane, and/or the like; sulfolanes; and/or the like.

The non-aqueous organic solvent may be utilized alone or in a mixture of two or more types or kinds, and if (e.g., when) two or more types or kinds are utilized in a mixture, a mixing ratio may be appropriately or suitably adjusted according to the desired battery performance, which is generally available to or generally used by those skilled in the field.

If (e.g., when) utilizing a carbonate-based solvent, a cyclic carbonate and a chain carbonate may be mixed and utilized, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and utilized in a volume ratio of about 1:1 to about 30:1.

The electrolyte solution may further include a vinyl ethylene carbonate-based compound, a vinylene carbonate-based compound, or an ethylene carbonate-based compound to improve or enhance the cycle life of a rechargeable lithium battery.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and/or the like.

The lithium salt dissolved in the non-aqueous organic solvent may supply lithium ions in a rechargeable lithium battery, enable a basic operation of a rechargeable lithium battery, and improve or enhance transportation of the lithium ions between a positive electrode and a negative electrode. Examples of the lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If (e.g., when) the concentration of lithium salt is within the foregoing range, the electrolyte solution may have appropriate or suitable ionic conductivity and viscosity, and thus excellent or suitable performance may be achieved and lithium ions may move effectively or suitably.

**Separator**

Depending on the type or kind of the rechargeable lithium battery, a separator may be present between the positive electrode and the negative electrode. The separator may include a polyethylene separator, a polypropylene separator, a polyvinylidene fluoride separator, or a multilayer film of two or more layers thereof, such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one surface or both surfaces (e.g., two opposing surfaces) of the porous substrate.

The porous substrate may be a polymer film of any one polymer selected from among polyolefin, such as polyethylene and polypropylene, polyester, such as polyethylene terephthalate and polybutylene terephthalate, polyacetal, polyamide, polyimide, polycarbonate, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (PTFE; e.g., Teflon™), or a copolymer or mixture of two or more thereof.

The porous substrate may have a thickness in a range of about 1 μm to about 40 μm, for example, about 1 μm to about 30 μm, about 1 μm to about 20 μm, about 5 μm to about 15 μm, or about 10 μm to about 15 μm.

The organic material may include a (meth)acrylic copolymer including a first structural unit derived from (meth)acrylamide and a second structural unit including at least one selected from a structural unit derived from (meth)acrylic acid or (meth)acrylate and a structural unit derived from (meth)acrylamidosulfonic acid or a salt thereof.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but embodiments of the present disclosure are not limited thereto. An average particle diameter ($D_{50}$) of the inorganic particles may be in a range of about 1 nm to about 2000 nm, for example, about 100 nm to about 1000 nm or about 100 nm to about 700 nm.

The organic material and the inorganic material may be mixed in one coating layer, or a coating layer including an organic material and a coating layer including an inorganic material may be stacked.

The thickness of the coating layer may be in a range of about 0.5 $\mu$m to about 20 $\mu$m, for example, about 1 $\mu$m to about 10 $\mu$m or about 1 $\mu$m to about 5 $\mu$m.

Examples and Comparative Examples of the present disclosure are described herein. However, the following examples are only examples of the present disclosure, and embodiments of the present disclosure are not limited to the following examples.

**Examples**

**Example 1**

**(1) Preparation of Positive Electrode Active Material**

A lithium cobalt-based oxide ($Li_{1.04}Co_{0.925}Zr_{0.01}Y_{0.015}Al_{0.04}O_2$) of large particles doped with zirconium, yttrium, and aluminium and having an average particle diameter ($D_{50}$) of 15.5 $\mu$m was prepared by adding $Li_2CO_3$ as a lithium precursor to $Co_3O_4$ having an average particle diameter ($D_{50}$) of 15.5 $\mu$m as a cobalt precursor, $Y_2O_3$ as a yttrium precursor, $ZrO_2$ as a zirconium precursor, and $Al_2O_3$ as an aluminium precursor to have a molar ratio of lithium to the cobalt, yttrium, zirconium, and aluminium of 1.04/1, dry-mixing them, and heat-treating the mixture at 1,050 °C in a furnace for 10 hours. Herein, the amounts of the cobalt precursor, the yttrium precursor, the zirconium precursor, and the aluminium precursor were stoichiometrically controlled to obtain the large particles ($Li_{1.04}Co_{0.925}Zr_{0.01}Y_{0.015}Al_{0.04}O_2$).

A lithium cobalt-based oxide ($Li_{1.04}C0_{0.925}Zr_{0.01}Y_{0.015}Al_{0.04}O_2$) of small particles doped with zirconium, yttrium, and aluminium and having an average particle diameter ($D_{50}$) of 5 $\mu$m was prepared by adding $Li_2CO_3$ as a lithium precursor to $Co_3O_4$ as a cobalt precursor having an average particle diameter ($D_{50}$) of 5 $\mu$m, $Y_2O_3$ as a yttrium precursor, $ZrO_2$ as a zirconium precursor, and $Al_2O_3$ as an aluminium precursor to have a molar ratio of lithium to the cobalt, the zirconium, the yttrium, and the aluminium of 1.04/1, dry-mixing them, and heat-treating the mixture at 950 °C in a furnace for 10 hours. Herein, the amounts of the cobalt precursor, the yttrium precursor, the zirconium precursor, and the aluminium precursor were stoichiometrically controlled to obtain the small particles

$$(Li_{1.04}Co_{0.935}Zr_{0.01}Y_{0.015}Al_{0.04}O_2).$$

The large particles and the small particles were mixed in a weight ratio of 8:2 to prepare a positive electrode active material, wherein the positive electrode active material had an average particle diameter ($D_{50}$) of about 15 $\mu$m.

**(2) Manufacturing of Positive Electrode**

The positive electrode active material, polyvinylidene fluoride as a binder, and carbon nanotube as a conductive (e.g., electrically conductive) material were mixed in a weight ratio of 98.7:0.9:0.4 (= positive electrode active material:binder:conductive material) to prepare a positive electrode active material composition. This positive electrode active material composition was dispersed in an N-methyl pyrrolidone solvent to prepare a positive electrode active material slurry, which was coated at a loading level of 17 mg/cm$^2$ on a 10 $\mu$m-thick Al foil and dried and then, compressed, manufacturing a positive electrode.

Herein, after compressing the positive electrode active material layer, the positive electrode active material layer had mixture density of about 4.2 g/cc and a thickness of about 40 $\mu$m.

**(3) Manufacturing of Rechargeable Lithium Battery Cell**

97.5 wt% of graphite as a negative electrode active material, 1.5 wt% of carboxymethyl cellulose, and 1 wt% of styrene-butadiene rubber as a binder were dispersed in distilled water to prepare a negative electrode active material slurry. The negative electrode active material slurry was coated on a 10 $\mu$m-thick Cu foil and then, dried and compressed to manufacture a negative electrode.

Between the positive electrode and the negative electrode, a 10 $\mu$m-thick polyethylene separator was disposed or provided to manufacture an electrode assembly, which was inserted into a case, and an electrolyte was injected into the case to manufacture a rechargeable lithium battery cell (100 mAh level pouch cell). The electrolyte was prepared by dissolving 1.15 M LiPF$_6$ in a mixed solvent of ethylene carbonate (EC) : ethyl methyl carbonate (EMC) : dimethyl carbonate (DMC) in a volume ratio of 2:4:4.

## Examples 2 to 4 and Comparative Examples 1 to 4

A positive electrode active material, a positive electrode, and a rechargeable lithium battery cell were manufactured in substantially the same manner as in Example 1 except that in preparing the positive electrode active material, the amounts of the cobalt precursor, the lithium precursor, the zirconium precursor, the yttrium precursor, and the aluminium precursor stoichiometrically were controlled so that positive electrode active material had the composition shown in Table 1. Inductively coupled plasma (ICP) spectroscopy was performed on the positive electrode active materials prepared in Examples 1 to 4 and Comparative Examples 1 to 4, and the contents of aluminium, zirconium, and yttrium, based on 100 wt% of the metals excluding lithium in the positive electrode active materials (lithium cobalt-based oxide), are shown in Table 1.

Table 1

| | Composition of positive electrode active material | Al content (wt%) | Zr content (wt%) | Y content (wt%) |
|---|---|---|---|---|
| Example 1 | $Li_{1.04}Co_{0.935}Zr_{0.01}Y_{0.015}Al_{0.04}O_2$ | | 1.5 | 2.2 |
| Example 2 | $Li_{1.04}Co_{0.895}Zr_{0.01}Y_{0.055}Al_{0.04}O_2$ | | 1.5 | 8.2 |
| Example 3 | $Li_{1.04}Co_{0.915}Zr_{0.03}Y_{0.015}Al_{0.04}O_2$ | | 4.5 | 2.2 |
| Example 4 | $Li_{1.04}Co_{0.875}Zr_{0.03}Y_{0.055}Al_{0.04}O_2$ | 1.8 | 4.5 | 8.2 |
| Comparative Example 1 | $Li_{1.04}Co_{0.96}Al_{0.04}O_2$ | | 0 | 0 |
| Comparative Example 2 | $Li_{1.04}C0_{0.85}Y_{0.11}Al_{0.04}O_2$ | | 0 | 16 |
| Comparative Example 3 | $Li_{1.04}Co_{0.80}Zr_{0.07}Al_{0.04}O_2$ | | 10.5 | 0 |
| Comparative Example 4 | $Li_{1.04}Co_{0.78}Zr_{0.07}Y_{0.11}Al_{0.04}O_2$ | | 10.5 | 16 |

## Evaluation Example 1. Analysis of Positive Electrode Active Material

### (1) Pellet Density Measurement

Each sample of the final positive electrode active materials of Examples 1 to 4 and Comparative Examples 1 to 4 was taken by 3 g and placed in a mold (area: 1.298 cm$^2$), and after inserting a mold bar into a mold body, the mold set was placed in a hydraulic pressure press and then, pressed with a pressure of 9 tons (Metric ton) for 30 seconds into a pellet, which was measured with respect to pellet density, and the results are shown in Table 2.

Table 2

| | Pellet density (g/cc) |
|---|---|
| Example 1 | 4.22 |
| Example 2 | 4.23 |
| Example 3 | 4.22 |
| Example 4 | 4.21 |
| Comparative Example 1 | 4.23 |
| Comparative Example 2 | 4.20 |
| Comparative Example 3 | 4.22 |
| Comparative Example 4 | 4.22 |

Referring to Table 2, the positive electrode active materials of Examples 1 to 4 and Comparative Examples 1 to 4 were confirmed to exhibit equivalent or almost or substantially the same pellet density.

### (2) Particle Size Distribution Measurement (PSD)

After measuring the pellet density of the positive electrode active materials of Example 4 and Comparative Example 1, particle size distribution graphs thereof were obtained under the following PSD measurement conditions.
LS13320 (Beckmann Coulter) was used as a laser particle size analyzer, and the analysis conditions are as follows.

- Pump Speed: 55%
- Sample ultrasonic wave dispersion: 40 KHz ultrasonic wave 60 sec
- Run length: 60 sec
- Refractive index ratio (Sample RI): 1.6
- e-factor: 1.00
- Sample amount: 0.20g
- Dispersant added to sample: 1 mL of 10% sodium hexametaphosphate

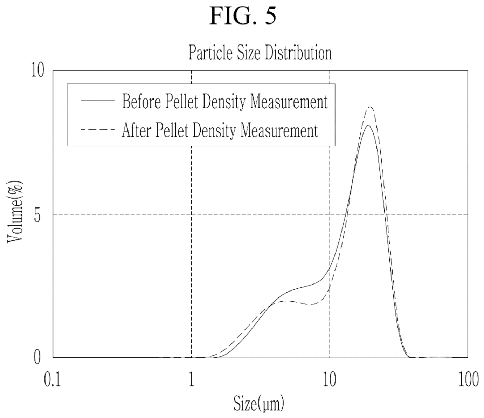

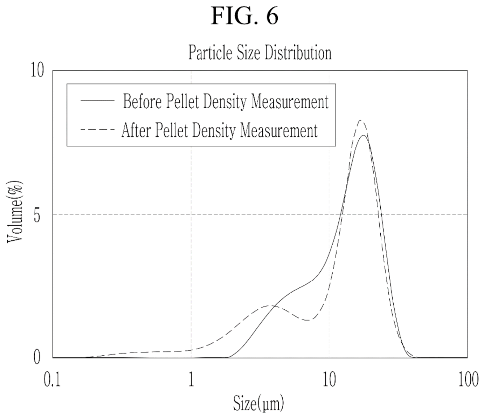

The particle size distribution graphs of Example 4 and Comparative Example 1 are shown in FIGS. 5 and 6. FIG. 5 is a graph of particle size distribution before and after measuring the pellet density of the positive electrode active material according to Example 4, and FIG. 6 is a graph of particle size distribution before and after measuring the pellet density of the positive electrode active material according to Comparative Example 1. For example, in FIGS. 5 and 6, the solid lines represent particle size distribution graphs before the pellet density measurement (before PD measurement), and the dotted lines represent particle size distribution graphs after the pellet density measurement (after PD measurement).
Referring to FIGS. 5 and 6, the positive electrode active material of Example 4, in which zirconium and yttrium in optimal amounts were doped, was confirmed to have no particles having a particle size of 1 $\mu$m or less, that is, no fine particles, after the pellet density measurement, but the positive electrode active material of Comparative Example 1, in which neither zirconium nor yttrium was doped, was confirmed to have particles having a particle size of 1 $\mu$m or less, that is, fine particles, after the pellet density measurement. Accordingly, the positive electrode active material, in which zirconium and yttrium were doped in optimal amounts, was confirmed to exhibit improved or enhanced particle strength.

### (3) Comparison of Cross-sections of Positive electrodes after Compression

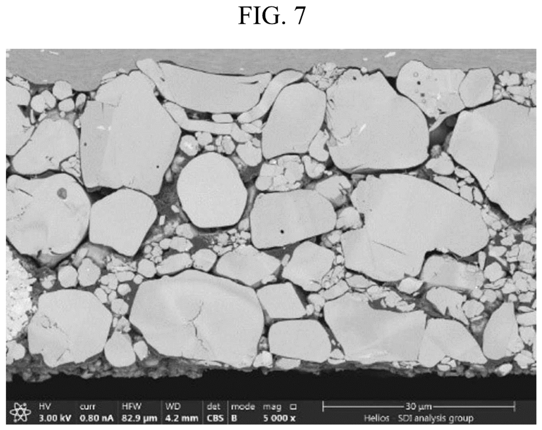

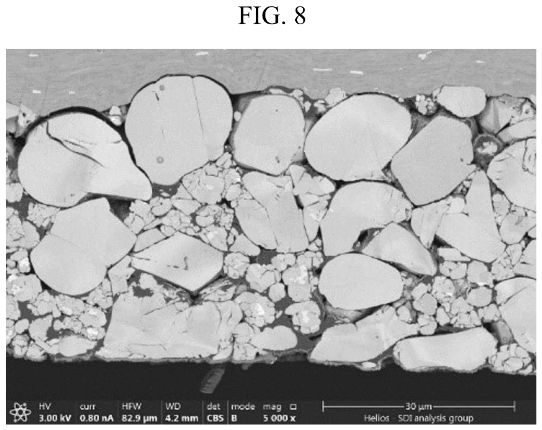

The positive electrodes according to Example 4 and Comparative Example 1 were respectively taken an image of each of their cross-sections with a scanning electron microscope (SEM) to examine whether or not the positive electrode active materials after compression were cracked during the manufacture of the positive electrodes. The above compression was performed at a pressure of 45 MPa. FIG. 7 is a scanning electron microscope (SEM) image of a cross-section of the positive electrode according to Example 4, and FIG. 8 is a scanning electron microscope (SEM) image of a cross-section of the positive electrode according to Comparative Example 1.
Referring to FIGS. 7 and 8, the positive electrode manufactured by utilizing the positive electrode active material of Example 4, in which zirconium and yttrium were doped in optimal doping amounts, was suppressed from cracks after the compression, but the positive electrode manufactured by utilizing the positive electrode active material of Comparative Example 1, in which zirconium and yttrium were doped in excessive amounts, exhibited cracks after the compression.

### Evaluation Example 2. Battery Cell Performance Evaluation

### (1) Measurement of Initial Charge/discharge Capacity

The rechargeable lithium battery cells of Examples 1 to 4 and Comparative Examples 1 to 4 were charged at a constant current of 0.2 C to an upper limit voltage of 4.58 V, then maintained at 4.58 V until the current decreased to 0.05C or less (current cut-off), and subsequently discharged to a cut-off voltage of 3 V at 0.2 C at 25 °C and then, measured with respect to initial charge capacity and initial discharge capacity (also referred to as "initial charge/discharge capacity"), which is shown in Table 3.

### (2) Cycle-life Characteristics under High-temperature and High- voltage

### Conditions

The rechargeable lithium battery cells of Examples 1 to 4 and Comparative Examples 1 to 4 were charged at a constant current rate of 0.35 C to SOC 100% and then, cut off at a current rate of 0.01 C, while maintained at 4.59 V, at 45 °C. Subsequently, the cells were discharged to a voltage of 3.0 V at the constant current rate of 0.35 C (formation step, $1^{st}$ cycle).

The rechargeable lithium battery cells after the $1^{st}$ cycle of the formation step were constant current-charged to 4.59 V at a current rate of 0.35 C. The fully charged cells were paused for about 10 minutes and then, constant current-discharged to 3 V at the current rate of 0.35 C, and this charging and discharging were 30 times repeated to evaluate cycle-life characteristics.

The cycle-life (at 4.59 V) characteristics were evaluated according to Equation 1, and the evaluation results are shown in Table 3.

Equation 1

$$\text{Cycle-life (\%)} = (30^{th} \text{ cycle discharge capacity}/1^{st} \text{ cycle discharge capacity}) \times 100$$

Table 3

| | Capacity (mAh/g) | | Cycle-life (%) (4.59V, 30 cycle) |
| --- | --- | --- | --- |
| | Initial Charge | Initial Discharge | |
| Example 1 | 214.1 | 196.9 | 85.5 |
| Example 2 | 212.5 | 195.6 | 87 |
| Example 3 | 213.8 | 196.5 | 86.7 |
| Example 4 | 212.2 | 195.9 | 87.2 |
| Comparative Example 1 | 214.5 | 197.9 | 81.1 |
| Comparative Example 2 | 211.1 | 192.8 | 85.4 |
| Comparative Example 3 | 214.1 | 197.0 | 83.8 |
| Comparative Example 4 | 210.2 | 192.1 | 85.5 |

Referring to Table 3, the rechargeable lithium battery cells of Examples 1 to 4, which included a positive electrode active material doped with zirconium and yttrium in optimal doping amounts, exhibited excellent or suitable initial discharge capacity (>195 mAh/g) at high voltages and excellent or suitable cycle-life characteristics ($\geq$85.5% at 30 cycles).

However, the rechargeable lithium battery cell of Comparative Example 1, which included a positive electrode active material doped with aluminium alone but with neither zirconium nor yttrium, exhibited inferior cycle-life characteristics to those of Examples 1 to 4. On the other hand, the rechargeable lithium battery cell of Comparative Example 2, which included a positive electrode active material doped with an excessive or substantial amount of yttrium but not with zirconium, exhibited comparable or inferior cycle-life characteristics, and significantly smaller initial discharge capacity at high voltages than Examples 1 to 4, and the rechargeable lithium battery cell of Comparative Example 3, which included a positive electrode active material doped with an excessive or substantial amount of zirconium but not with yttrium, exhibited excellent initial discharge capacity at high voltages but significantly inferior cycle-life characteristics to those of Examples 1 to 4. Also, the rechargeable lithium battery cell of Comparative Example 4, which included a positive electrode active material doped with excessive or substantial amounts of zirconium and yttrium, exhibited comparable or inferior cycle-life characteristics, and significantly small initial discharge capacity at high voltages than Examples 1 to 4.

Accordingly, a positive electrode active material doped with optimal amounts Accordingly, a positive electrode active material doped with optimal amounts of zirconium and yttrium was confirmed to improve or enhance particle strength and thereby, suppress cracks (or reduce a degree or occurrence of crack formation), and accordingly, a rechargeable lithium battery cell including the positive electrode active material doped with optimal amounts of zirconium and yttrium was confirmed to exhibit excellent or suitable initial discharge capacity at high voltages and cycle-life characteristics.

While the subject matter of the present disclosure has been described in connection with what is presently considered to be practical example embodiments, it is to be understood that embodiments of the present disclosure are not limited to the disclosed embodiments. On the contrary, embodiments of the present disclosure are intended to cover one or more suitable modifications and equivalent arrangements included within the scope of the appended claims and equivalents thereof.

**Reference Numerals**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

1. lithium cobalt-based oxide including zirconium and yttrium,
   wherein:
   a content of zirconium is in a range of 0.1 wt% to 10 wt% based on 100 wt% of a total metal excluding lithium in the lithium cobalt-based oxide, and
   a content of yttrium is in a range of 0.5 wt% to 15 wt% based on 100 wt% of a total metal excluding lithium in the lithium cobalt-based oxide.

2. The positive electrode active material as claimed in claim 1, wherein:

   the lithium cobalt-based oxide is represented by Chemical Formula 1:

   $$\text{Chemical Formula 1} \qquad \text{Li}_{a1}\text{Co}_{x1}\text{Zr}_{y1}\text{Y}_{z1}\text{M}^1{}_{w1}\text{O}_{2-b1},$$

   wherein, in Chemical Formula 1, $0.8 \leq a1 \leq 1.2$, $0.85 \leq x1 \leq 0.99$, $0.001 \leq y1 \leq 0.05$, $0.005 \leq z1 \leq 0.1$, $0 \leq w1 \leq 0.1$, $0.856 \leq x1+y1+z1+w1 \leq 1.24$, $0 \leq b1 \leq 0.05$, and $M^1$ is Al, B, Ba, Ca, Ce, Cr, Cu, F, Fe, Mg, Mn, Mo, Nb, P, S, Si, Sr, V, W, Zn, or a combination thereof.

3. The positive electrode active material as claimed in claim 1 or claim 2, wherein:
   the lithium cobalt-based oxide further includes aluminium.

4. The positive electrode active material as claimed in claim 3, wherein:
   a content of aluminium for the lithium cobalt-based oxide is in a range of 0.1 wt% to 5 wt% based on 100 wt% of a total metal excluding lithium in the lithium cobalt-based oxide.

5. The positive electrode active material as claimed in any one of claims 1 to 4, wherein:

   the positive electrode active material is small particles, large particles, or a mixture of the small particles and the large particles,
   wherein an average particle diameter ($D_{50}$) of the large particles is in a range of 9 $\mu$m to 25 $\mu$m, and
   an average particle diameter ($D_{50}$) of the small particles is in a range of 0.5 $\mu$m to 8 $\mu$m.

6. The positive electrode active material as claimed in claim 5, wherein:
   a weight ratio of the small particles to the large particles in the mixture of the small particles and the large particles is in a range of 50:50 to 10:90.

7. The positive electrode active material as claimed in any one of claims 1 to 6, wherein:
   the positive electrode active material is in a form of particles, and, in the particle size distribution measured after pressurizing the particles to 3 tons, particles having a size of less than or equal to 1 $\mu$m are present at less than 1 volume%.

8. A positive electrode, comprising:

   a positive electrode current collector; and
   a positive electrode active material layer provided on the positive electrode current collector and comprising the positive electrode active material as claimed in any one of claims 1 to 7.

9. The positive electrode as claimed in claim 8, wherein:
   a loading level of the positive electrode active material layer is in a range of 10 mg/cm$^2$ to 30 mg/cm$^2$.

10. The positive electrode as claimed in claim 8 or claim 9, wherein:
    a mixture density of the positive electrode active material layer is in a range of 4.1 g/cc to 4.25 g/cc.

11. The positive electrode as claimed in any one of claims 8 to 10, wherein:
    an amount of the positive electrode active material is in a range of 90 wt% to 99.8 wt% based on 100 wt% of the positive electrode active material layer.

12. The positive electrode as claimed in any one of claims 8 to 11, wherein:

    the positive electrode active material layer further comprises a binder, a conductive material, or a combination thereof,
    an amount of the binder is in a range of 0.1 wt% to 5 wt% based on 100 wt% of the positive electrode active material layer, and
    an amount of the conductive material is in a range of 0.1 wt% to 5 wt% based on 100 wt% of the positive electrode active material layer.

13. A rechargeable lithium battery, comprising:
    the positive electrode as claimed in any one of claims 8 to 12, a negative electrode, and an electrolyte.

# FIG. 1

FIG. 2

# FIG. 3

100

50

72

40

71

10

30

20

# FIG. 4

<u>100</u>

FIG. 5

## FIG. 6

Particle Size Distribution

FIG. 7

FIG. 8

EP 4 733 262 A1

Europäisches
Patentamt
European
Patent Office
Office européen
des brevets

# EUROPEAN SEARCH REPORT

**Application Number**

EP 25 20 9442

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 599 222 A1 (NINGDE AMPEREX TECHNOLOGY LTD [CN]) 29 January 2020 (2020-01-29) * paragraphs [0006] - [0008], [0026] - [0031]; example 20; table 2 * ----- | 1-13 | INV. C01G51/42 H01M4/525 |
| A | EP 4 446 284 A1 (SAMSUNG SDI CO LTD [KR]) 16 October 2024 (2024-10-16) * paragraphs [0007] - [0023], [0032] - [0093], [0134] - [0159]; examples 1-5 * ----- | 1-13 | |
| A | KR 2024 0151032 A (LG CHEMICAL LTD [KR]) 17 October 2024 (2024-10-17) * paragraphs [0010] - [0040], [0054] - [0087]; examples 1-5; tables 1-3 * ----- | 1-13 | |

TECHNICAL FIELDS
SEARCHED      (IPC)

C01G

The present search report has been drawn up for all claims

| Place of search | Date of completion of the search | Examiner |
|---|---|---|
| Munich | 18 March 2026 | Lecerf, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 9442

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2026

| Patent document cited in search report | | Publication date | Patent family member(s) | | Publication date |
|---|---|---|---|---|---|
| EP 3599222 | A1 | 29-01-2020 | CN | 109004198 A | 14-12-2018 |
| | | | EP | 3599222 A1 | 29-01-2020 |
| | | | US | 2020035991 A1 | 30-01-2020 |
| EP 4446284 | A1 | 16-10-2024 | EP | 4446284 A1 | 16-10-2024 |
| | | | JP | 2024138220 A | 08-10-2024 |
| | | | US | 2024322155 A1 | 26-09-2024 |
| KR 20240151032 | A | 17-10-2024 | CN | 120826795 A | 21-10-2025 |
| | | | EP | 4668361 A1 | 24-12-2025 |
| | | | KR | 20240151032 A | 17-10-2024 |
| | | | WO | 2024215048 A1 | 17-10-2024 |

EPO FORM P0459

For more details about this annex : see Official Journal of the European Patent Office, No. 12/82